(19) Europäisches Patentamt / European Patent Office / Office européen des brevets

(11) **EP 3 479 930 A1**

(12) **EUROPÄISCHE PATENTANMELDUNG**

(43) Veröffentlichungstag:
**08.05.2019 Patentblatt 2019/19**

(51) Int Cl.:
*B22F 1/00* (2006.01)      *B22F 3/105* (2006.01)
*B33Y 70/00* (2015.01)      *B33Y 10/00* (2015.01)

(21) Anmeldenummer: **17200347.7**

(22) Anmeldetag: **07.11.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Heraeus Additive Manufacturing
GmbH
63450 Hanau (DE)**

(72) Erfinder: **Bauereiß, Andreas
63452 Hanau (DE)**

(54) **VERWENDUNG EINER WÄSSRIGEN ZUSAMMENSETZUNG FÜR DIE ADDITIVE FERTIGUNG EINES METALLISCHEN FORMKÖRPERS**

(57)    Die vorliegende Erfindung betrifft ein Verfahren zur additiven Fertigung eines metallischen Formkörpers durch ein Strahlschmelzen oder Strahlsintern, umfassend (i) Bereitstellen einer wässrigen, ein Metallpulver enthaltenden Zusammensetzung in Form einer Schicht S1 auf einem Substrat, (ii) selektives Aufschmelzen oder Sintern des Metallpulvers in der Schicht S1, wobei die zwischen den Metallpulverpartikeln vorliegenden Hohlräume zu Beginn des Schritts (ii) teilweise mit einem Gas gefüllt sind.

EP 3 479 930 A1

**Beschreibung**

Additive Fertigungsverfahren arbeiten werkzeuglos und ohne Form. Das Volumen eines Objekts wird dabei schichtweise gemäß einem digitalen Computermodell aufgebaut.

Auch metallische Formkörper lassen sich über eine additive Fertigung herstellen. Beispielsweise erfolgt die additive Fertigung über ein Strahlschmelzen oder Strahlsintern eines Metallpulvers (Pulverbett-basierte Verfahren). Als Strahlquellen werden Laser- oder Elektronenstrahlen verwendet (selektives Laserstrahlschmelzen oder -sintern, selektives Elektronenstrahlschmelzen oder -sintern).

Beim selektiven Laserschmelzen wird der zu verarbeitende Werkstoff in Pulverform in einer dünnen Schicht auf der Bauplatte oder einer bereits zuvor abgeschiedenen Werkstoffschicht aufgebracht. Der pulverförmige Werkstoff wird mittels Laserstrahlung lokal vollständig geschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird solange wiederholt, bis der fertige Formkörper erhalten wird. Beim selektiven Elektronenstrahlschmelzen erfolgt das lokale Aufschmelzen des Pulvers durch einen Elektronenstrahl.

WO 98/24574 A1 beschreibt ein Verfahren zur Herstellung eines Formkörpers durch ein selektives Lasersintern bzw. Laserschmelzen, wobei ein metallisches Werkstoffpulver aufgebracht und durch den Laserstrahl aufgeschmolzen wird, der Laserstrahl in mehreren Spuren über den vorgegebenen Bereich der Werkstoffpulverschicht so geführt wird, dass jede folgende Spur des Laserstrahls die vorherige Spur teilweise überlappt und eine Schutzgasatmosphäre über der Wechselwirkungszone von Laserstrahl mit dem metallischen Werkstoffpulver aufrechterhalten wird.

Den aktuellen Stand der additiven Fertigung von metallischen Formkörpern, z.B. durch Laserstrahl- und Elektronenstrahlschmelzen von schichtweise aufgetragenem Metallpulver, beschreiben beispielsweise D. Herzog et al., Acta Materialia, 117 (2016), S. 371-392. M. Markl et al., Schweißen und Schneiden, 69 (2017), Heft 1-2, S. 30-39 beschreiben die additive Fertigung durch selektives Elektronenstrahlschmelzen.

Die Pulverbett-basierten Verfahren unter Verwendung von Metallpulvern weisen gewisse Nachteile auf.

Da Metallpulver aufgrund ihrer hohen Oberfläche sehr reaktiv sein können, stellen sie erhöhte Anforderungen an ihre sichere Handhabung.

Beim Elektronenstrahlschmelzen müssen die Pulverpartikel des Pulverbetts miteinander in elektrischem Kontakt stehen, um statische Aufladungen und daraus resultierende Pulverexplosionen zu vermeiden.

WO 2017/037165 A1 beschreibt ein additives Fertigungsverfahren durch ein selektives Laserschmelzen oder -sintern, wobei der zu schmelzende bzw. zu versinternde Pulverwerkstoff schichtweise in Form einer Suspension aufgetragen wird.

Eine Aufgabe der vorliegenden Erfindung ist die Bereitstellung eines additiven Fertigungsverfahrens durch ein Strahlschmelzen bzw. -sintern, das die oben genannten Nachteile eines Pulverbettverfahrens, insbesondere die erhöhten Sicherheitsanforderungen aufgrund reaktiver Metallpulver, vermeidet, auch für Metalle mit geringer Laserstrahlabsorption effektiv durchgeführt werden kann und ein verbessertes Aufschmelzverhalten (z.B. Ausbildung eines einheitlichen Schmelzfilms anstelle isolierter Schmelztröpfchen) ermöglicht.

Gelöst wird die Aufgabe durch ein Verfahren zur additiven Fertigung eines metallischen Formkörpers durch ein Strahlschmelzen oder Strahlsintern, umfassend

(i) Bereitstellen einer wässrigen, ein Metallpulver enthaltenden Zusammensetzung in Form einer Schicht S1 auf einem Substrat,
(ii) selektives Aufschmelzen oder Sintern des Metallpulvers in der Schicht S1 durch eine Strahlquelle, wobei die zwischen den Metallpartikeln des Metallpulvers vorliegenden Hohlräume zu Beginn des Schritts (ii) teilweise mit einem Gas gefüllt sind,
(iii) nach dem Erstarren des aufgeschmolzenen oder gesinterten Metallpulvers Bereitstellen der wässrigen, ein Metallpulver enthaltenden Zusammensetzung in Form einer weiteren Schicht S2 auf der zuvor bereitgestellten Schicht S1,
(iv) selektives Aufschmelzen oder Sintern des Metallpulvers in der weiteren Schicht S2 durch die Strahlquelle.

Ein Metallpulver besteht allgemein aus Metallpulverpartikeln, zwischen denen interpartikuläre Hohlräume vorliegen. Bei einem trockenen Pulver sind diese interpartikulären Hohlräume vollständig mit einem Gas gefüllt. Handelt es sich um ein nasses oder feuchtes Pulver, können die interpartikulären Hohlräume teilweise oder sogar vollständig mit der anwesenden Flüssigkeit gefüllt sein.

Im Rahmen der vorliegenden Erfindung wurde überraschend erkannt, dass die sichere Handhabung und das Aufschmelzen eines Metallpulvers durch eine Strahlquelle (z.B. einen Laser- oder Elektronenstrahl) im Rahmen eines additiven Fertigungsverfahrens verbessert werden kann, wenn anstelle eines trockenen Pulvers ein nasses oder feuchtes Pulver (d.h. eine wässrige, ein Metallpulver enthaltende Zusammensetzung) der Strahlbehandlung unterzogen wird und die Menge des Wassers und optionaler Additive so gewählt ist, dass zu Beginn des selektiven Schmelz- oder Sinterschritts die interpartikulären Hohlräume zwischen den Metallpulverpartikeln teilweise mit einem Gas gefüllt sind (d.h. die interpartikulären Hohlräume enthalten neben Wasser und optionalen Additiven auch noch ein Gas, z.B. das in dem additiven Verfahren eingesetzte inerte Schutzgas wie Stickstoff oder ein Edelgas).

Durch die relativen Volumenanteile des Wassers und optionaler Additive (wie z.B. einem Flussmittel und/oder einem Feuchthaltemittel) lässt sich steuern, ob die zwischen den Metallpulverpartikeln vorliegenden Hohlräume vollständig durch diese Komponenten ausgefüllt sind oder noch ein Restvolumen in diesen interpartikulären Hohlräumen verbleibt, das mit einem Gas wie z.B. dem inerten Schutzgas des additiven Fertigungsverfahrens ausgefüllt werden kann.

Das Gesamtvolumen der auf dem Substrat bereitgestellten Schicht S1 (d.h. $V_{Schicht\,S1}$) ergibt sich aus der Summe der Volumen der Einzelkomponenten, d.h.

- dem Volumen des Wassers $V_{H2O}$,
- dem Volumen des Metallpulvers $V_{Metall}$,
- sofern anwesend, dem Volumen einer oder mehrerer Additive $V_{Additiv}$,
- sofern anwesend, dem Volumen des interpartikulären Gases $V_{Gas}$.

Das Volumen einer zugegebenen Komponente lässt sich messen oder gegebenenfalls über die Beziehung $V = m / \rho$ bestimmen, wobei m die Masse und $\rho$ die Dichte der jeweiligen Komponente ist.

Das Volumen der auf dem Substrat bereitgestellten Schicht S1 lässt sich also durch folgende Beziehung ausdrücken:

$$V_{Schicht\,S1} = \frac{m_{H_2O}}{\rho_{H_2O}} + \frac{m_{Additiv}}{\rho_{Additiv}} + V_{Gas} + \frac{m_{Metall}}{\rho_{Metall}}$$

Sofern die wässrige Metallpulver-haltige Zusammensetzung kein Additiv enthält, gilt natürlich ($m_{Additiv} / \rho_{Additiv}$) = 0.

Zu Beginn des Schritts (ii) ist $V_{Gas} > 0$ (d.h. die zwischen den Metallpulverpartikeln vorliegenden interpartikulären Hohlräume sind zu Beginn des Schritts (ii) teilweise mit einem Gas gefüllt).

Bevorzugt genügt die auf dem Substrat bereitgestellte Schicht S1 zu Beginn des Schritts (ii) der folgenden Bedingung:

$$V_{Gas} / V_{Schicht\,S1} > 0{,}04.$$

Noch bevorzugter ist $V_{Gas} / V_{Schicht\,S1} > 0{,}06$ oder sogar $> 0{,}08$.
In einer bevorzugten Ausführungsform gilt:

$$0{,}40 > V_{Gas} / V_{Schicht\,S1} > 0{,}04$$

Noch bevorzugter gilt:

$$0{,}35 > V_{Gas} / V_{Schicht\,S1} > 0{,}06$$

oder

$$0{,}30 > V_{Gas} / V_{Schicht\,S1} > 0{,}08.$$

Weiterhin genügt die auf dem Substrat bereitgestellte Schicht S1 zu Beginn des Schritts (ii) bevorzugt der folgenden Bedingung:

$$0{,}001 \leq R \leq 0{,}50$$

wobei

$$R=(V_{H2O} + V_{Additiv}) / V_{Schicht\,S1}$$

Aufgrund der Beziehung V = m / ρ (wobei m die Masse und ρ die Dichte der jeweiligen Komponente sind), lässt sich der Parameter R auch durch folgende Beziehung wiedergeben:

$$R \;=\; \frac{\dfrac{m_{H_2O}}{\rho_{H_2O}} + \dfrac{m_{Additiv}}{\rho_{Additiv}}}{V_{Schicht\,S1}}$$

Bevorzugter gilt:

$$0,01 \le R \le 0,45;$$

noch bevorzugter gilt:

$$0,05 \le R \le 0,40.$$

Wie dem Fachmann bekannt ist, handelt es sich bei der additiven Fertigung um ein Verfahren, bei dem der Formkörper auf Basis digitaler 3D-Daten schichtweise aufgebaut wird. Im Rahmen der vorliegenden Erfindung ist das Strahlschmelzen oder -sintern bevorzugt ein Laserstrahlschmelzen oder -sintern oder ein Elektronenstrahlschmelzen oder -sintern. Bevorzugt findet die additive Fertigung in Anwesenheit eines inerten Schutzgases (z.B. Stickstoff oder ein Edelgas) statt.

Bei dem Strahlschmelzen oder Strahlsintern handelt es sich bevorzugt um ein Laserstrahlschmelzen oder -sintern oder ein Elektronenstrahlschmelzen oder -sintern. In diesen Fällen ist die Strahlquelle also bevorzugt ein Laserstrahl oder ein Elektronenstrahl.

Bei dem Substrat kann es sich um die noch unbeschichtete Bauplatte der Strahlschmelz- bzw. -sintervorrichtung oder alternativ um zuvor bereits auf der Bauplatte abgeschiedene Materialschichten des herzustellenden Formkörpers handeln.

Durch den Begriff "wässrige Zusammensetzung" wird zum Ausdruck gebracht, dass die Zusammensetzung neben dem Metallpulver auch noch Wasser enthält.

Hinsichtlich der Metalle, die im Rahmen der vorliegenden Erfindung verwendet werden können, gibt es keine Beschränkungen. Beispielsweise ist das Metall ein Edelmetall (z.B. Gold, Silber, Platin, Palladium, Ruthenium, Rhodium oder Iridium), ein Halbedelmetall (insbesondere Kupfer), ein Refraktärmetall (z.B. Titan) oder ein Leichtmetall (z.B. Aluminium oder Magnesium). Das Metall kann in elementarer Form, in Form einer Legierung oder einer intermetallischen Phase vorliegen. Unter dem Begriff "Legierung eines Metalls" wird eine Legierung verstanden, die dieses Metall als Hauptkomponente (z.B. in einem Anteil von mehr 50 at%) und daneben ein oder mehrere Legierungselemente enthält. Refraktärmetalle sind unedle Metalle der 4. Nebengruppe (Titan, Zirconium, Hafnium), 5. Nebengruppe (Vanadium, Niob, Tantal) und 6. Nebengruppe (Chrom, Molybdän, Wolfram), wobei deren Schmelzpunkt bevorzugt oberhalb des Schmelzpunktes von Platin liegt.

Wie oben bereits erwähnt, weisen insbesondere Kupfer, Gold, Silber oder Aluminium oder eine Legierung oder intermetallische Phase eines dieser Metalle gegenüber Laserstrahlen mit einer Wellenlänge im IR-Bereich eine sehr geringe Absorption auf. Mit dem erfindungsgemäßen Verfahren lassen sich auch diese Metalle oder ihre Legierungen oder intermetallische Phasen sehr gut in einem Laserschmelz- oder Lasersinterverfahren zu einem metallischen Formkörper verarbeiten.

Geeignete Partikelgrößen eines Metallpulvers im Rahmen eines additiven Fertigungsverfahrens sind dem Fachmann bekannt oder können gegebenenfalls durch Routineversuche bestimmt werden. Beispielsweise weist das Metallpulver einen massebezogenen $d_{50}$-Wert im Bereich von 10 μm bis 200 μm auf. Die Bestimmung des $d_{50}$-Werts erfolgt beispielsweise durch Laserbeugung.

Geeignete Metallpulver sind kommerziell erhältlich oder lassen sich über Verfahren, die dem Fachmann bekannt sind, herstellen.

Optional kann die Zusammensetzung neben dem Metallpulver und dem Wasser noch ein oder mehrere Additive enthalten. Beispielsweise ist das Additiv ein Feuchthaltemittel oder ein Flussmittel.

Feuchthaltemittel sind dem Fachmann bekannt, beispielsweise aus dem Bereich der kosmetischen Zubereitungen. Bevorzugt ist das Feuchthaltemittel ein Polyol bzw. eine Polyhydroxyverbindung (d.h. eine Verbindung, die mindestens zwei Hydroxy-Gruppen aufweist), eine Mono- oder Polyalkoxyverbindung (d.h. eine Verbindung, die eine oder mehrere Alkoxy-Gruppen aufweist) oder eine Aminosäure oder ein Gemisch aus mindestens zwei dieser Verbindungen.

Beispielsweise ist die Polyhydroxyverbindung Glycerin, ein Glycol (z.B. Ethylenglycol, Propylenglycol, Butylenglycol), ein Zuckeralkohol (z.B. Sorbitol, Mannitol, Glucitol, Isomalt, Lactit, Xylit, Threit, Erythrit oder Arabit), ein Polyalkylenglycol (z.B. Diethylenglycol, Dipropylenglycol, ein Polyalkylenglycol mit einem zahlengemittelten Molekulargewicht von $\leq 5000$ g/mol, bevorzugter $\leq 2000$ g/mol, noch bevorzugter $\leq 500$ g/mol), ein Oligo- oder Polysaccharid oder ein Gemisch aus mindestens zwei dieser Verbindungen.

Das Polyalkylenglycol ist beispielsweise ein Polyethylenglycol oder ein Polypropylenglycol. Bevorzugt weist das Polyalkylenglycol ein zahlengemitteltes Molekulargewicht von $\leq 5000$ g/mol, bevorzugter $\leq 2000$ g/mol, noch bevorzugter $\leq 500$ g/mol auf.

Die Bestimmung des zahlengemittelten Molekulargewichts kann beispielsweise durch nasschemische OH-Zahlbestimmung nach DIN 53 240 oder entsprechend der in der US 2010/0240864 A1 beschriebenen Methode erfolgen.

Das Oligo- oder Polysaccharid ist beispielsweise ein Galaktose-haltiges Polysaccharid (z.B. Agarose, Agar).

Die Mono- oder Polyalkoxy-Verbindung kann beispielsweise eine Monohydroxy-Verbindung oder auch eine OH-freie Verbindung sein. Die Polyalkoxy-Verbindung enthält bevorzugt Ethoxy- und/oder Propoxy-Gruppen. Die Alkoxy-Gruppen können beispielsweise als terminale Gruppen vorliegen. Zwei oder mehr Alkoxy-Gruppen können unmittelbar aufeinander folgend in der Verbindung vorliegen. Die Mono- oder Polyalkoxy-Verbindung wird beispielsweise erhalten, indem eine oder mehrere Hydroxy-Gruppen in einer der oben genannten Polyhydroxy-Verbindungen alkoxyliert (z.B. ethoxyliert und/oder propoxyliert) werden, so dass eine alkoxylierte MonoHydroxy-Verbindung oder eine alkoxylierte Hydroxy-freie Verbindung vorliegt.

Bezogen auf das Wasser der wässrigen Zusammensetzung liegt das Feuchthaltemittel beispielsweise in einem Anteil von 0,1 bis 60 Vol%, bevorzugter 0,5-50 Vol% vor. Das Volumen des zugegebenen Feuchthaltemittels kann unmittelbar gemessen oder über die Beziehung $V_{Feuchthaltemittel} = m_{Feuchthaltemittel} / \rho_{Feuchthaltemittel}$ (wobei m die Masse und $\rho$ die Dichte des Feuchthaltemittels sind) bestimmt werden.

Bevorzugt ist das Feuchthaltemittel wasserlöslich. Beispielsweise weist das Feuchthaltemittel bei 25°C eine Löslichkeit in Wasser von mindestens 1 g/l, bevorzugter mindestens 5 g/l, noch bevorzugter mindestens 7 g/L oder sogar mindestens 10 g/l auf.

Wie dem Fachmann bekannt ist, werden Flussmittel üblicherweise beim Löten von Metallen eingesetzt. Geeignete Flussmittel sind beispielsweise solche, die in der DIN EN 1045:1997 als Flussmittel zum Hartlöten genannt werden. Beispielsweise ist das Flussmittel eine Bor-haltige Verbindung, ein Phosphat, ein Silikat, ein borfreies Chlorid oder Fluorid (z.B. ein Alkalimetall-, Erdalkalimetall- oder Ammoniumfluorid oder -chlorid).

Als Bor-haltige Verbindung können beispielsweise Borsäure, Boroxide (z.B. $B_2O_3$), Borate (z.B. Alkalimetall-, Erdalkalimetall- oder Ammoniumborate) oder Fluoroborate (z.B. Alkalimetall-, Erdalkalimetall- oder Ammoniumfluoroborate) genannt werden. Das Borat ist beispielsweise ein Metaborat oder ein Tetraborat.

Bezogen auf das Wasser der wässrigen Zusammensetzung liegt das Flussmittel beispielsweise in einem Anteil von 0,1 bis 50 Vol%, bevorzugter 1 bis 30 Vol% vor. Das Volumen des zugegebenen Flussmittels kann unmittelbar gemessen oder über die Beziehung $V_{Flussmittel} = m_{Flussmittel} / \rho_{Flussmittel}$ (wobei m die Masse und $\rho$ die Dichte des Flussmittels sind) bestimmt werden. Sofern die wässrige Zusammensetzung auch ein Feuchthaltemittel enthält, liegt das Flussmittel beispielsweise in einem Anteil von 0,5 bis 50 Vol%, bezogen auf die Summe der Volumia des Wasser und des Feuchthaltemittels (d.h. $V_{H2O} + V_{Feuchthaltemittel}$), vor.

Das Bereitstellen der wässrigen Zusammensetzung in Form einer Schicht auf dem Substrat kann beispielsweise erfolgen, indem die wässrige Zusammensetzung unter Verwendung üblicher, dem Fachmann bekannter Hilfsmittel auf dem Substrat aufgebracht wird. Das schichtförmige Aufbringen der wässrigen Zusammensetzung erfolgt beispielsweise durch ein Rakel, eine Walze, eine Presse oder durch Siebdruck oder eine Kombination aus mindestens zwei dieser Methoden.

Sofern die auf dem Substrat aufgebrachte wässrige Zusammensetzung bereits der oben definierten Bedingung genügt (d.h. die interpartikulären Hohlräume des Metallpulvers enthalten neben Wasser und optionalen Additiven auch ein Gas), kann nach dem Aufbringen der wässrigen Zusammensetzung ohne weitere Zwischenschritte der Schritt (ii) erfolgen.

Alternativ ist es auch möglich, dass nach dem Aufbringen auf das Substrat der Wassergehalt der wässrigen Zusammensetzung durch eine geeignete Maßnahme (z.B. durch Behandlung mit der Strahlquelle, so dass ein Teil des Wassers verdampft, wobei ein Aufschmelzen oder Sintern des Metallpulvers jedoch bevorzugt noch nicht stattfindet) reduziert wird, bevor der Schritt (ii) erfolgt.

Im Rahmen der vorliegenden Erfindung kann das Bereitstellen der wässrigen Zusammensetzung in Form einer Schicht auf dem Substrat beispielsweise auch dadurch erfolgen, dass zunächst ein trockenes Metallpulver auf dem Substrat schichtförmig aufgebracht wird und das Wasser anschließend dieser trockenen Pulverschicht zugeführt wird.

Dies kann beispielsweise durch eine Befeuchtungseinheit (z.B. in Form einer oder mehrerer Düsen) erfolgen, die das Pulver benebelt oder besprüht. Das dem trockenen Metallpulver zugegebene Wasser kann optional ein Additiv, z.B. ein Feuchthaltemittel und/oder ein Flussmittel, enthalten. Das Aufbringen der trockenen Pulverschicht kann mit den gleichen Mitteln wie das Aufbringen der wässrigen Zusammensetzung erfolgen, also z.B. einem Rakel, einer Walze oder einer Presse.

In Schritt (ii) erfolgt das selektive Aufschmelzen oder Sintern des Metallpulvers in der durch die wässrige Zusammensetzung gebildeten Schicht S1 durch eine Strahlquelle, wobei die zwischen den Metallpartikeln des Metallpulvers vorliegenden interpartikulären Hohlräume zu Beginn des Schritts (ii) teilweise mit einem Gas gefüllt sind. Ob ein Aufschmelzen oder ein Sintern des Metallpulvers erfolgt, lässt sich beispielsweise durch die Strahlungsintensität steuern. Bevorzugt handelt es sich bei der Strahlquelle um einen Laserstrahl oder einen Elektronenstrahl. Mit dem Begriff "selektiv" wird bekanntermaßen zum Ausdruck gebracht, dass im Rahmen der additiven Fertigung eines Formkörpers das Aufschmelzen oder Sintern des Metallpulvers auf Basis digitaler 3D-Daten des Formkörpers nur in definierten, vorgegebenen Bereichen der Schicht stattfindet.

Nach dem Erstarren des aufgeschmolzenen oder gesinterten Metallpulvers erfolgt in Schritt (iii) das Bereitstellen der oben beschriebenen wässrigen Zusammensetzung in Form einer weiteren Schicht S2 auf der zuvor bereitgestellten Schicht S1.

Die Bereitstellung der weiteren Schicht S2 kann auf die gleiche Weise erfolgen wie die Bereitstellung der Schicht S1. Hinsichtlich der bevorzugten Eigenschaften der die Schicht S2 bildenden wässrigen Zusammensetzung kann auf die obigen Ausführungen verwiesen werden.

Das für die Bereitstellung der Schicht S2 verwendete Metall kann mit dem für die Bereitstellung der Schicht S1 verwendeten Metall übereinstimmen.

Alternativ ist es jedoch möglich, für die Schicht S2 ein Pulver eines anderen Metalls zu verwenden.

Zwischen Schritt (ii) und Schritt (iii) wird die Bauplatte bevorzugt um einen Betrag abgesenkt, der im Wesentlichen der Schichtdicke der Schicht S1 entspricht. Diese Vorgehensweise im Rahmen der additiven Fertigung eines Formkörpers ist dem Fachmann allgemein bekannt.

Hinsichtlich des selektiven Aufschmelzens oder Sinterns des Metallpulvers in der durch die wässrige Zusammensetzung gebildeten Schicht S2 durch eine Strahlquelle in Schritt (iv) kann auf die obigen Ausführungen zu Schritt (ii) verwiesen werden. Bevorzugt sind die zwischen den Metallpulverpartikeln vorliegenden interpartikulären Hohlräume zu Beginn des Schritts (iv) ebenfalls teilweise mit einem Gas (z.B. dem inerten Schutzgas) gefüllt.

Bevorzugt werden die Schritte (i)-(iv) in Anwesenheit eines inerten Schutzgases wie Stickstoff oder einem Edelgas durchgeführt. Durch das inerte Schutzgas wird im Bauraum der Strahlschmelz- bzw. Strahlsintervorrichtung eine Schutzgasatmosphäre ausgebildet, die eine unerwünsche Oxidation des Metalls verhindert.

Die Schritte (iii) und (iv) werden bevorzugt ein- oder mehrmals wiederholt, z.B. bis zur Fertigstellung des metallischen Formkörpers wiederholt.

Die vorliegende Erfindung wird anhand der nachfolgenden Beispiele eingehender beschrieben.

**Beispiele**

In den folgenden Beispielen und Vergleichsbeispielen wurde für das selektive Laserschmelzen folgendes Gerät verwendet: Concept Laser Mlab Cusing. Laser: Nd:YAG-Laser, Wellenlänge: 1,064 $\mu$m.

Beispiel 1

Es wurde eine wässrige Zusammensetzung, die Kupferpulver und Agar (Feuchthaltemittel) enthält, zubereitet. Die wässrige Zusammensetzung enthielt Wasser in einem Anteil von 29,5 Vol%. Bezogen auf das Wasser, lag das Agar in einem Anteil von 1,7 Vol% vor.

Die wässrige Zusammensetzung wurde in dem Bauraum des Geräts in Form einer dünnen Schicht (Schichtdicke etwa 200-400 $\mu$m) auf die Bauplatte aufgebracht. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Zu diesem Zeitpunkt betrug der gemeinsame Volumenanteil des Wassers und des Additivs 29 Vol%. Um diesen Wert zu bestimmen, wurde in einem Kontrollexperiment die wässrige Zusammensetzung auf einer dünnen Aluminiumplatte mit derselben Methodik wie für den Schmelzversuch aufgetragen. Dafür wurden 5 g der wässrigen Zusammensetzung aufgetragen und in derselben Schutzgasströmung 10 Minuten belassen, anschließend entfernt und mitsamt der Platte gewogen. Aus dem Gewichtsverlust durch das abgedampfte Wasser kann der gemeinsame Volumenanteil des Wassers und des Additivs zu Beginn des Laserschmelzschritts bestimmt werden.

Zu Beginn des Laserschmelzschritts lag das Metallpulver in einem Anteil von 53 Vol% in der wässrigen Zusammensetzung vor.

Somit enthielt die wässrige Zusammensetzung zu Beginn des Schritts (ii), d.h. zu Beginn des Laserschmelzschritts, ein zwischen den Metallpulverpartikeln vorliegendes Gas in einem Anteil von (100 Vol% - 53 Vol% - 29 Vol%) = 18 Vol%.

Zu Beginn des Laserschmelzschritts lag also in den interpartikulären Hohlräumen des Metallpulvers nicht nur Wasser und das Feuchthaltemittel, sondern auch ein Gas vor.

Der Laserstrahl bewegte sich mit einer Geschwindigkeit von 5000 mm/s bei einer Strahlleistung von 95 W und einem Abstand benachbarter Linien von 1 $\mu$m über eine vordefinierte Fläche von 2 x 2 mm$^2$ der aufgebrachten Schicht der wässrigen Zusammensetzung. Das Aufschmelzen des Metallpulvers in definierten Bereichen der aufgebrachten Schicht erfolgte bei Raumtemperatur.

Vergleichsbeispiel 1

Aus den gleichen Komponenten wie in Beispiel 1, d.h. Wasser, Kupferpulver und Agar (Feuchthaltemittel), wurde eine wässrige Zusammensetzung zubereitet. Die wässrige Zusammensetzung enthielt Wasser in einem Anteil von 60 Vol%. Bezogen auf das Wasser, lag das Feuchthaltemittel in einem Anteil von 1,7 Vol% vor.

Unter den gleichen Bedingungen wie in Beispiel 1 wurde die wässrige Zusammensetzung in dem Bauraum des Geräts in Form einer dünnen Schicht (Schichtdicke etwa 200-400 $\mu$m) auf die Bauplatte aufgebracht. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Zu diesem Zeitpunkt betrug der gemeinsame Volumenanteil des Wassers und des Additivs in der wässrigen Zusammensetzung 59 Vol%. Die Bestimmung dieses Wertes erfolgte wie in Beispiel 1 beschrieben.

Zu Beginn des Laserschmelzschritts (ii) setzte sich das Gesamtvolumen der wässrigen Zusammensetzung ausschließlich aus den Volumina des Wassers und Feuchthaltemittels sowie des Metallpulvers zusammen. Die zwischen den Metallpulverpartikeln vorliegenden Hohlräume waren also vollständig mit Wasser und Additiv gefüllt und enthielten kein Gas.

In Übereinstimmung mit Beispiel 1 bewegte sich der Laserstrahl mit einer Geschwindigkeit von 5000 mm/s bei einer Strahlleistung von 95 W und einem Abstand benachbarter Linien von 1 $\mu$m über eine vordefinierte Fläche von 2 x 2 mm$^2$ der aufgebrachten Schicht der wässrigen Zusammensetzung. Das Aufschmelzen des Metallpulvers in definierten Bereichen der aufgebrachten Schicht erfolgte bei Raumtemperatur.

Anhand mikroskopischer Aufnahmen der mit dem Laserstrahl behandelten Flächen wurde das Aufschmelzverhalten des Metallpulvers verglichen. Es zeigte sich, dass das Metallpulver, das in seinen interpartikulären Hohlräumen auch ein Gas enthielt, ein deutlich verbessertes Schmelzverhalten aufwies.

**Patentansprüche**

1. Ein Verfahren zur additiven Fertigung eines metallischen Formkörpers durch ein Strahlschmelzen oder Strahlsintern, umfassend

   (i) Bereitstellen einer wässrigen, ein Metallpulver enthaltenden Zusammensetzung in Form einer Schicht S1 auf einem Substrat,
   (ii) selektives Aufschmelzen oder Sintern des Metallpulvers in der Schicht S1 durch eine Strahlquelle, wobei die zwischen den Metallpulverpartikeln vorliegenden Hohlräume zu Beginn des Schritts (ii) teilweise mit einem Gas gefüllt sind,
   (iii) nach dem Erstarren des aufgeschmolzenen oder gesinterten Metallpulvers Bereitstellen der wässrigen, ein Metallpulver enthaltenden Zusammensetzung in Form einer weiteren Schicht S2 auf der zuvor bereitgestellten Schicht S1,
   (iv) selektives Aufschmelzen oder Sintern des Metallpulvers in der weiteren Schicht S2 durch die Strahlquelle.

2. Verfahren nach Anspruch 1, wobei die auf dem Substrat bereitgestellte Schicht S1 zu Beginn des Schritts (ii) der folgenden Bedingung genügt:

$$V_{Gas} / V_{Schicht\ S1} > 0,04$$

wobei

Gas das Volumen des Gases ist, das in den Hohlräumen zwischen den Metallpulverpartikeln vorliegt und $V_{Schicht\ S1}$ das Volumen der Schicht S1 ist.

3.  Verfahren nach Anspruch 1 oder 2, wobei die auf dem Substrat bereitgestellte Schicht S1 zu Beginn des Schritts (ii) der folgenden Bedingung genügt:

$$0{,}001 \le R \le 0{,}50$$

wobei

$$R=(V_{H2O} + V_{Additiv}) / V_{Schicht\ S1}$$

wobei

- $V_{H2O}$ das Volumen des in der Schicht S1 vorliegenden Wassers ist,
- sofern vorhanden, $V_{Additiv}$ das Volumen einer oder mehrerer in der Schicht S1 vorliegenden Additive ist,
- $V_{Schicht\ S1}$ das Volumen der Schicht S1 ist.

4.  Verfahren nach einem der Ansprüche 1-3, wobei das Bereitstellen in Schritt (i) erfolgt, indem die wässrige Zusammensetzung auf dem Substrat aufgebracht wird und wobei nach dem Aufbringen der wässrigen Zusammensetzung auf dem Substrat ohne weitere Zwischenschritte der Schritt (ii) erfolgt.

5.  Verfahren nach einem der Ansprüche 1-3, wobei das Bereitstellen in Schritt (i) erfolgt, indem die wässrige Zusammensetzung auf dem Substrat aufgebracht und anschließend einer Behandlung mit der Strahlquelle unterzogen wird, so dass ein Teil des Wassers verdampft, ein Aufschmelzen oder Sintern des Metallpulvers jedoch noch nicht stattfindet.

6.  Verfahren nach einem der Ansprüche 1-3, wobei das Bereitstellen in Schritt (i) erfolgt, indem zunächst eine Schicht eines trockenen Metallpulvers auf dem Substrat aufgebracht und anschließend Wasser der trockenen Pulverschicht zugegeben wird.

7.  Verfahren nach einem der vorstehenden Ansprüche, wobei die wässrige Zusammensetzung außerdem ein Additiv, bevorzugt ein Feuchthaltemittel und/oder ein Flussmittel, enthält.

8.  Verfahren nach einem der vorstehenden Ansprüche, wobei das Metall ein Edelmetall, ein Halbedelmetall (insbesondere Kupfer), ein Refraktärmetall, ein Leichtmetall (insbesondere Aluminium) oder eine Legierung oder eine intermetallische Phase eines dieser Metalle ist.

9.  Verfahren nach einem der vorstehenden Ansprüche, wobei das Strahlschmelzen oder Strahlsintern ein Laserstrahlschmelzen, ein Laserstrahlsintern, ein Elektronenstrahlschmelzen oder ein Elektronenstrahlsintern ist.

10. Verfahren nach einem der vorstehenden Ansprüche, wobei das Strahlschmelzen oder -sintern in Anwesenheit eines Schutzgases erfolgt und es sich bei dem Gas, das zu Beginn des Schritts (ii) in den Hohlräumen zwischen den Metallpulverpartikeln vorliegt, um dieses Schutzgas handelt.

Europäisches
Patentamt

European
Patent Office

Office européen
des brevets

## EUROPÄISCHER RECHERCHENBERICHT

Nummer der Anmeldung

EP 17 20 0347

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2017/037165 A1 (STICHTING ENERGIEONDERZOEK CENTRUM NEDERLAND [NL]) 9. März 2017 (2017-03-09) | 1,3-10 | INV. B22F1/00 B22F3/105 |
| A | * Abbildung 1 * * Seite 4, Zeile 23 - Seite 5, Zeile 30 * ----- | 2 | B33Y70/00 B33Y10/00 |
| X | WANG XINJIAN ET AL: "Fabrication of friction-reducing texture surface by selective laser melting of ink-printed (SLM-IP) copper (Cu) nanoparticles(NPs)", APPLIED SURFACE SCIENCE, Bd. 396, 2. November 2016 (2016-11-02), Seiten 659-664, XP029855614, ISSN: 0169-4332, DOI: 10.1016/J.APSUSC.2016.11.003 | 1,3,4, 6-9 | |
| A | * Absatz [02.1] - Absatz [02.2] * ----- | 2,5,10 | |
| A | EP 3 181 271 A1 (SEIKO EPSON CORP [JP]) 21. Juni 2017 (2017-06-21) * das ganze Dokument * ----- | 1-10 | |
| A | CN 107 200 583 A (HARBIN INSTITUTE OF TECH) 26. September 2017 (2017-09-26) * das ganze Dokument * ----- | 1-10 | RECHERCHIERTE SACHGEBIETE (IPC) B22F B29C B33Y |

Der vorliegende Recherchenbericht wurde für alle Patentansprüche erstellt

| Recherchenort | Abschlußdatum der Recherche | Prüfer |
|---|---|---|
| Den Haag | 24. Mai 2018 | Morra, Valentina |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 0347

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-05-2018

| Im Recherchenbericht angeführtes Patentdokument | Datum der Veröffentlichung | Mitglied(er) der Patentfamilie | Datum der Veröffentlichung |
|---|---|---|---|
| WO 2017037165 A1 | 09-03-2017 | KEINE | |
| EP 3181271 A1 | 21-06-2017 | CN 107097416 A | 29-08-2017 |
| | | EP 3181271 A1 | 21-06-2017 |
| | | JP 2017110271 A | 22-06-2017 |
| | | US 2017173688 A1 | 22-06-2017 |
| CN 107200583 A | 26-09-2017 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9824574 A1
- WO 2017037165 A1

- US 20100240864 A1

**In der Beschreibung aufgeführte Nicht-Patentliteratur**

- **D. HERZOG et al.** *Acta Materialia,* 2016, vol. 117, 371-392

- **M. MARKL et al.** *Schweißen und Schneiden,* 2017, vol. 69, 30-39